# EUROPÄISCHE PATENTANMELDUNG

(11) **EP 0 568 494 A1**
(43) Veröffentlichungstag der Anmeldung: **03.11.1993**
(21) Anmeldenummer: 93810261.3
(22) Anmeldetag: 13.04.1993
(51) Int. Cl.: G01P 15/125

(54) **Kapazitives Beschleunigungs-Messsystems**

(30) Priorität: 27.04.1992 US 873762
(71) Anmelder: K.K. HOLDING AG, CH-8408 Winterthur (CH)
(72) Erfinder: Kübler, John Marcel, E. Amherst, NY (US); Geiger, John Andrew, E. Amherst, NY (US); Calderara, Reto, CH-8312 Winterberg (CH); Cuhat, Daniel, Lafayette 47905 Indiana (US)

(57) **Zusammenfassung**

Ein Ziel der vorliegenden Erfindung ist die Schaffung eines Beschleunigungs-Messsystems, das dadurch miniaturisiert ist, dass die Erreger- und Messelektronik vom Beschleunigungs-Sensorchip getrennt ist, wodurch der Aufnehmer sehr leicht wird. Ein weiteres Ziel ist die Schaffung eines hochpräzisen Beschleunigungs-Messsystems mit auswechselbaren, sehr leichten Aufnehmern, die mit entfernten Elektronikmodulen verbunden werden können. Das Beschleunigungs-Messsystem umfasst mindestens einen Aufnehmer (1) mit einem Miniaturgehäuse (2), elektrisch verbunden, jedoch vibrationsmässig isoliert, durch ein Kabel (7) von einem entfernten Elektronikmodul (8). Zur Verminderung des Aufnehmergewichtes enthält dieser nur wenigstens ein Sensorchip (3), ein Kalibrierungs-Netzwerk (4), ein Polarisations-Netzwerk (5) und einen Impedanzwandler (6), alle auf demselben Substrat integriert. Der Elektronikmodul (8) enthält den grössten Teil der Elektronik, nämlich wenigstens einen Erregerkreis (9), einen synchronen Demodulationskreis (10) und ein Ausgangsfilter (11). Das Beschleunigungs-Messsystem kann überdies Mehrkomponenten-Aufnehmer sowie Mehrkanal-Elektronikmodule umfassen.

## Beschreibung

Die vorliegende Erfindung betrifft ein kapazitives Beschleunigungs-Messsystem mit einem Sensorchip als variabler Differentialkondensator und einem synchronen Demodulations-Schaltkreis.

Solche Systeme sind speziell geeignet zur Messung von kleinen Beschleunigungen niedriger Frequenz oder im stationären Zustand.

Die vorliegende Erfindung ermöglicht Beschleunigungsmessungen mit höherer Auflösung und Stabilität als gegenwärtig auf dem Markt erhältliche Accelerometer zu gleichen Kosten. Mögliche Anwendungen reichen von langsamen seismischen Bewegungen zu Modal-Analyse, wo Messungen eine grosse Frequenz-Bandweite erfordern. Typische Fälle, wo das erfindungsgemässe Beschleunigungs-Messsystem die Effektivität der Modal-Analyse erhöht, umfasst Untersuchen von hochelastischem Blech oder plastischen Strukturen als auch solche von langsam schwingenden grossen Objekten wie Balken-Tragwerken, Staudämmen und anderen Bauwerken.

Speziell bei leichten Testobjekten erlaubt die sehr geringe Masse des Aufnehmers die Minimierung von Deformationen und Bewegungen. Ein weiterer Vorteil des erfindungsgemässen Beschleunigungs-Messsystems besteht in der Möglichkeit, Mehrkanalmessungen mit einer willkürlichen Anzahl von sehr leichten Aufnehmern, welche schwingungsmässig von einem Elektronikmodul isoliert, jedoch elektrisch damit verbunden sind. Dieser kann gemeinsame Erreger- und gemeinsame oder multiplexe Signalverarbeitungs-Schaltkreise umfassen.

Accelerometer basierend auf variablen Differentialkondensatoren sind seit Jahrzehnten bekannt. Kommerziell spielten sie eine geringe Rolle verglichen mit piezoelektrischen oder piezoresistiven Accelerometern. Für hochfrequente Messungen sind piezoelektrische Aufnehmer sehr gut geeignet. Wenn die Empfindlichkeit bei sehr niedrigen Frequenzen wichtig ist, werden piezoresistive und kapazitive Aufnehmer bevorzugt. Die piezoresistiven Aufnehmer sind im allgemeinen billiger als die kapazitiven Accelerometer jedoch ist ihr statisches Verhalten kritisch, weil ihre elektronische Drift stark von der thermischen Kompensation der Brückenwiderstände abhängt.

Anderseits haben kapazitive Systeme den Vortei, dass sie keine Messwiderstände benötigen mit hohem oder nicht-linearem Temperaturkoeffizienten des elektrischen Widerstandes. Kondensatoren mit einem Gas oder Vakuum als Dielektrikum können mit sehr geringem Temperaturkoeffizienten des Kapazitätsverhältnisses der Differentialkondensatoren hergestellt werden, wodurch Aufnehmer mit ausgezeichnetem thermischem Verhalten und hoher Langzeitstabilität möglich werden.

Feinstbearbeitete Silizium-Accelerometer mit seismischen Massen und Aufhängungen, die durch anisotropes Aetzen hergestellt werden, sind ideal geeignet für kleine und leichte Aufnehmer. Kapazitive Mikrosensoren haben im allgemeinen sehr geringe Differential-Kapazitäten von wenigen pF. Da sogar sehr kurze Kabel Kapazitäten der selben Grössenordnung haben, müssen die Erreger- und Signalverarbeitungs-Schaltungen im gleichen Gehäuse montiert werden wie der Sensorchhip, um empfindliche Effekte der Temperatur- oder Vibrationsabhängigkeit der parasitischen Kapazitäten zu verhindern.

Die Stabilität der Empfindlichkeit, die Abwesenheit von Drift sowie die Auflösung hängen von parasitischen und Streukapazitäten ab, die sich nach dem Schaltungsprinzip des Messkreises richten. In der Literatur wird eine grosse Anzahl von Kapazitätsmesskreisen beschrieben. Für Aufnehmer-Anwendungen basieren die Schaltungen entweder auf Impedanzbrücken mit Spannungs- oder Strommessung, oder auf Schwingkreisen, oder auf dem Prinzip der Schaltkapazitäten (Prinzip Ladung-Entladung).

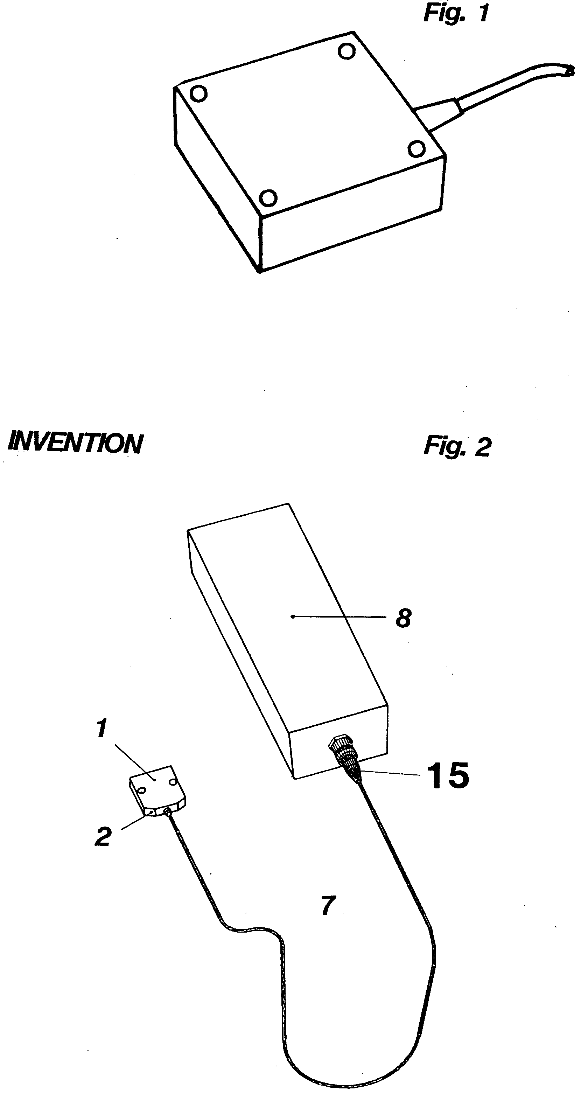

Um hohe Stabilität und Auflösung zu erreichen, werden konventionelle Hochpräzisions-Mikro-Accelerometer gebaut, unabhängig vom Schaltungsprinzip, mit Erreger- und Messschaltungen im gleichen Aufnehmergehäuse montiert, wie in Fig. 1 gezeigt wird.

Ein Ziel der vorliegenden Erfindung ist es, ein Beschleunigungs-Messsystem zu schaffen, welches dadurch miniaturisiert ist, dass die Erreger- und Messschaltkreise vom Beschleunigungssensorchip getrennt sind, um einen extrem leichten Aufnehmer zu erhalten.

Ein weiteres Ziel ist es, ein Hochpräzisions-Beschleunigungs-Messsystem zu schaffen mit auswechselbaren extrem leichten Beschleunigungsaufnehmern, die mit einem entfernten Elektronikmodul verbunden sind.

Die oben angegebenen Ziele werden dadurch erreicht, dass das erfindungsgemässe Beschleunigungsmesssystem mindestens einen Aufnehmer in einem Miniaturgehäuse umfasst, der durch ein Kabel mit einem entfernten Elektronikmodul verbunden, von diesem jedoch vibrationsmässig isoliert ist. Um das Gewicht des Aufnehmers auf ein Minimum zu reduzieren, umfasst er nur wenigstens einen Sensorchip, ein Polarisations-Netzwerk und einen Impedanzwandler, welche alle auf demselben Substrat integriert werden können. Anderseits ist der grösste Teil der Schaltkreise im Elektronikmodul und im Verbindungsstecker untergebracht. Mindestens eine Erregerschaltung, eine synchrone Demodulationsschaltung und ein Ausgangsfilter sind im Elektronikmodul untergebracht und ein Kalibrierungs-Netzwerk ist vorzugsweise im Verbindungsschalter integriert. Alternativ kann das Kalibrierungs-Netzwerk auch auf dem Substrat des Aufnehmers angebracht sein. Der Erregerschaltkreis umfasst einen Differential-Sinuswellengenerator, der zwei RF-Spannungen der selben Frequenz, aber umgekehrter Phase, erzeugt, sowie einen Phasenschieber, welcher den Demodulator synchronisiert. Der Elektronikmodul kann überdies Vorrichtungen zur Einstellung der Empfindlichkeit und/oder der Offsetspannung enthalten. Das Beschleunigungs-Messsystem kann überdies Mehrkomponenten-Aufnehmer sowie Mehrkanal-Elektronikmodule umfassen.

Weitere Ziele, Vorteile und neue Eigenschaften der vorliegenden Erfindung ergeben sich aus der folgenden detaillierten Beschreibung der Erfindung in Verbindung mit den Zeichnungen.

In den Zeichnungen bezeichnen dieselben Referenzziffern immer dieselben Komponenten.
- Fig. 1: stellt eine perspektivische Ansicht eines konventionellen Accelerometers dar (Stand der Technik)
- Fig. 2: zeigt eine perspektivische Ansicht eines erfindungsgemässen Beschleunigungs-Messsystems
- Fig. 3: zeigt eine schematische Darstellung der elektrischen Schaltkreise im Aufnehmer und Elektronikmodul des erfindungssgemässen Beschleunigungs-Messsystems
- Fig. 4: stellt eine perspektivische Ansicht dar der elektronischen Komponenten und des Sensorchips montiert auf einer Substrat-Platte im Aufnehmer des Beschleunigungs-Messsystems.
- Fig. 5: stellt eine perspektivische Teilansicht eines Differentialkondensators als Sensorchip im Aufnehmer des erfindungsgemässen Beschleunigungs-Messsystems dar
- Fig. 6: zeigt eine schematische Darstellung von Sensorchips, Polarisations-Netzwerk und einem Impedanzwandler, eingeschlossen im Aufnehmer, gemäss der vorliegenden Erfindung
- Fig. 7: ist eine schematische Darstellung des erfindungsgemässen Erregerkreises
- Fig. 8: zeigt einen erfindungsgemässen synchronen Demodulationskreis
- Fig. 9: zeigt ein Blockdiagramm eines Mehrkanal-Elektronikmoduls, enthaltend einen erfindungsgemässen Erregerkreis.

Fig. 2 zeigt eine bevorzugte Ausführungsform der vorliegenden Erfindung, in welcher ein sehr leichter Aufnehmer 1 durch ein sehr dünnes Kabel 7 mit dem Elektronikmodul 8 verbunden ist.

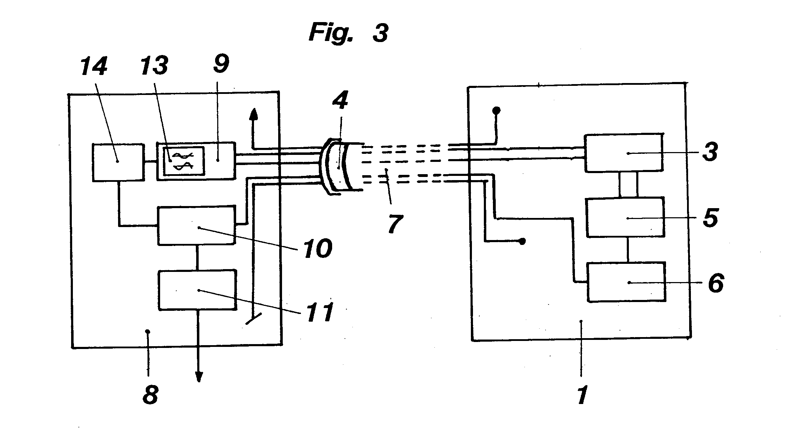

Der Aufnehmer 1 umfasst ein Miniaturgehäuse 2 aus einer Titanoder Aluminiumlegierung zwecks Kombination einer guten mechanischen Festigkeit mit einem sehr leichten Gewicht. Das Gehäuse 2 kann auch aus einem Polymermaterial bestehen mit genügender Festigkeit zur Verhinderung von Deformationen der elektronischen Komponenten im Gehäuse 2, welche in den folgenden Figuren dargestellt sind. Das Kabel 7 ist ein flexibles abgeschirmtes vieradriges Kabel integriert im Gehäuse 2 und abgeschlossen mit einem Verbindungsstecker 15 zum Elektronikmodul 8, wie in Fig. 3 dargestellt. Der Verbindungsstecker 15 ist eine vorzugsweise zylindrische Einheit, die so dimensioniert ist, dass sie mit einem Kalibrierungs-Netzwerk 4 ausgestattet werden kann, das gewöhnlich aus Laser-getrimmten Widerständen besteht. Dadurch ist es möglich, den Aufnehmer leichter zu machen als 4g und die Trägheitseinflüsse des Elektronikmoduls 8 auf ein leichtes und elastisches Testobjekt zu eliminieren, was z.B. eine Modul-Analyse erleichtert.

Die Trennung des Beschleunigungs-Messsystems in einen sehr leichten Aufnehmerteil 1 und einen entfernten Elektronikmodul 8 haben die folgenden weiteren Verbesserungen zur Folge, welche die Möglichkeiten eines konventionellen Accelerometers offensichtlich übertreffen:
Der Temperaturbereich eines Aufnehmers 1 ist nicht mehr begrenzt durch konventionelle elektronische Komponenten wie z.B. Oszillatoren, die sich innerhalb des Accelerometergehäuses befinden, wie dies bei kapazitiven Accelerometern nach dem Stand der Technik der Fall ist. Ueberdies reduziert die getrennte Unterbringung der Erregung und Signalverarbeitung die technische Drift und die sonstigen Temperatueinflüsse auf den Aufnehmer. Ein weiterer wichtiger Vorteil der vorliegenden Erfindung ist die Verbesserung der Robustheit des Aufnehmers 1 wegen seiner minimalen Grösse und die Abwesenheit von vibrations- oder schockgefährdeten elektronischen Schaltkreisen.

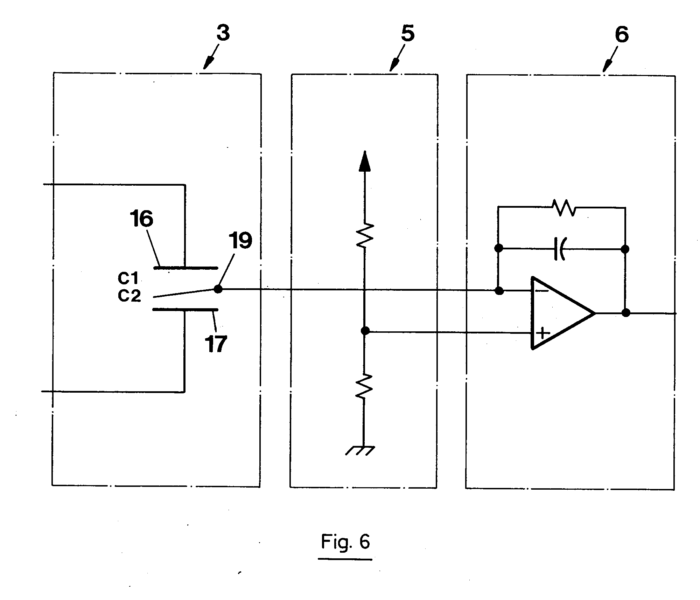

Fig. 3 stellt das Funktionsprinzip des erfindungsgemässen Beschleunigungs-Messsystems dar. Der Aufnehmer 1, wie er in den Figuren 3 und 6 dargestellt ist, umfasst einen Sensor-Chip 3, vorzugsweise hergestellt durch Feinstbearbeitung von Silizium. Ueberdies umfasst er einige Elektronikbestandteile zur Erstellung einer Verbindung mit niedriger Impedanz zum Elektronikmodul 8 und zur Erreichung standardisierter Verbindungsverhältnisse für den Fall, da Aufnehmer 1 ausgetauscht werden müssen. Deshalb ist im Verbindungsstecker 15 ein Kalibrierungs-Netzwerk 4 untergebracht, z.B. ein elektrischer Widerstand, dessen Dimensionierung sich nach den Fabrikationstoleranzen des Sensorchips 3 richtet. Ein Kondensator kann auch im Kalibrierungs-Netzwerk 3 enthalten sein. Der Aufnehmer 1 enthält ausserdem ein Polarisations-Netzwerk 5, bestehend beispielsweise aus elektrischen Widerständen, um Signale zu polarisieren, d.h. um die Null-Linie zwischen positiven und negativen Signalen zu setzen, welche in den Impedanzwandler 6 eingespiesen werden. Der Impedanzwandler 6 ist ein Verstärker mit einer grösseren Bandbreite als die Erregungsfrequenz.

Er ist so dimensioniert, dass die relativ kleine Verstärkungs-Aenderung infolge der Kabellänge minimalisiert werden kann. Vorzugsweise umfasst er einen geräuscharmen integrierten Operationsverstärker-Schaltkreis mit einem Rückkopplungs-Kondensator und einem Widerstand und arbeitet als Operationsverstärker. Die Abhängigkeit der Verstärkung von der Frequenz ist im allgemeinen derart, dass bei Frequenzverminderung um eine Dekade die Verstärkung um 3dB abnimmt.

Da die Auflösung des Beschleunigungs-Messsystems vom Rauschen des Verstärkers abhängt, sollte der Operationsverstärker auf geringes Rauschen hin ausgewählt sein. Der Elektronikmodul 8 umfasst mindestens einen Erregerkreis 9, einen synchronen Demodulationskreis 10 und ein Ausgangsfilter 11.

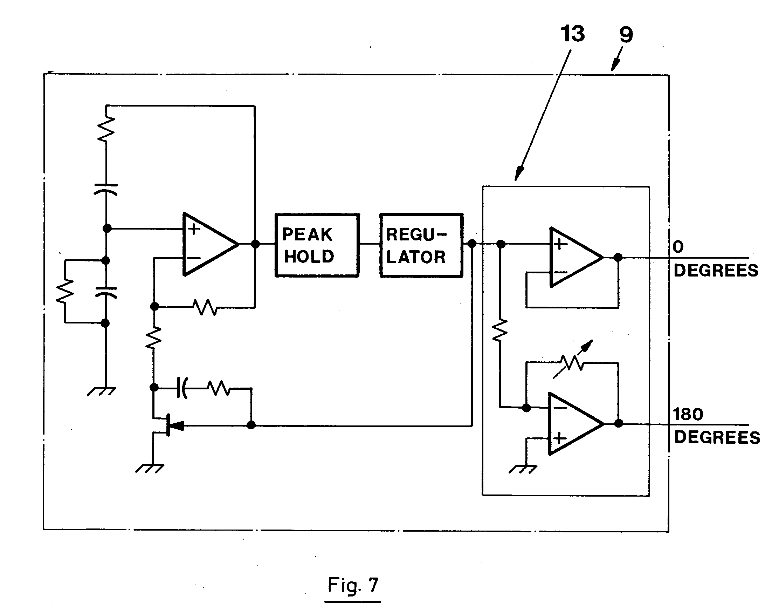

Wie in Fig. 7 dargestellt, umfasst der Erregerkreis 9 einen Differential-Sinuswellengenerator zur Erregung des Sensorchips 3 mit zwei RF-Spannungen gleicher Frequenz, aber von ungleicher Phase. Vorzugsweise enthält er einen Oszillator mit einer Wien-Brücke 21 mit Temperatur-Stabilisation und einem invertierenden Operationsverstärker 13, welcher die Phasenverschiebung von 180° erzeugt. Die Operationsverstärker-Anordnung muss nach dem benötigten Empfindlichkeitsfaktor und den Offsetbereichen des Beschleunigungs-Messsystems dimensioniert werden. Der Empfindlichkeitsfaktor kann variiert werden als Funktion der RF-Spannung sowie nach den Dimensionen des Sensorchips 3. Da die Empfindlichkeit des Sensorchips 3 von den Fabrikationstoleranzen, verursacht durch Kapazitäts- und Federkonstantenänderungen, abhängt, ist es vorteilhaft, eine Abstimmung für die Erregerspannung im Regelkreis vorzusehen, z.B. durch einen variablen Widerstand. Die Rückkopplung des Aufnehmerausgangs kann angepasst werden durch Veränderung der relativen Amplituden von zwei RF-Erregersignalen je nach Verstärkung der zwei Operationsverstärkerkanäle, wie dargestellt durch den variablen Widerstand in einem der Rückkopplungspfade. Dies ermöglicht die Behebung von Rückkopplungsfehlern ohne Phasenverschiebung.

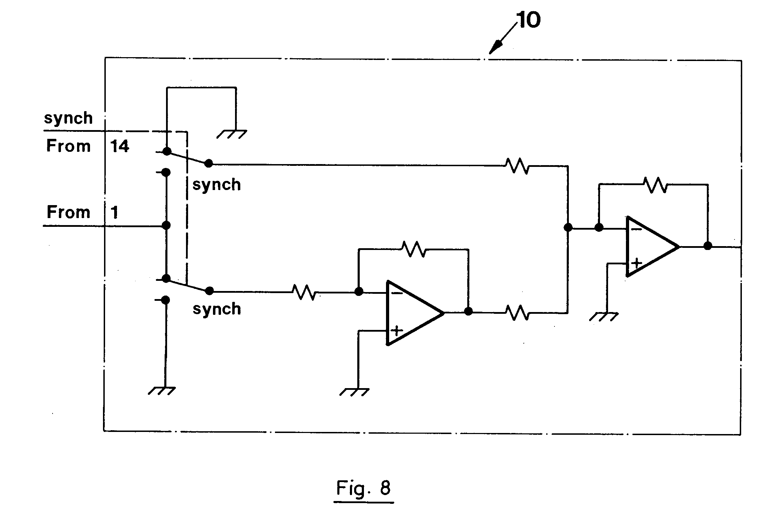

Ein synchroner Demodulations-Schaltkreis 10, wie in Fig. 8 dargestellt, dient der Aufnahme des Basis-Bandsignals (RF-Differential-Signal) vom Sensorchip 3-Ausgang.

Der Phasenschieber 14 verbindet den Ausgang des Erregerkreises 9 als Referenzsignal mit dem Demodulationskreis 10. Dieser ermittelt nur die korrelierten Komponenten des Signals und weist die unkorrelierten Komponenten zurück. Deshalb können kleine Signale auch in der Gegenwart von Rauschen sehr genau entdeckt werden, d.h. die Auflösung der Beschleunigungssignale ist sehr hoch. Ein weiterer Vorteil des synchronen Demodulationskreises ist seine Immunität gegenüber elektromagnetischen Interferenzen.

Der Elektronikmodul 8 umfasst im weiteren ein Ausgangsfilter 11, um vom demodulierten Ausgangssignal die Erregerfrequenz und abgeleitete Komponenten zu entfernen. Seine Funktion kann entweder aktiv oder passiv sein, je nach den Erfordernissen des Beschleunigungs-Messsystems. Für die meisten Anwendungen wird ein passiver Filter genügen, beispielsweise ein Fünfpolfilter bestehend aus einem Butterworth-Tiefpassfilter zweiter Ordnung und drei RC-Filtern erster Ordnung, unter Umständen mit einem Phasen korrigierenden Netzwerk zum Abstimmen von Amplituden- und Phasengang.

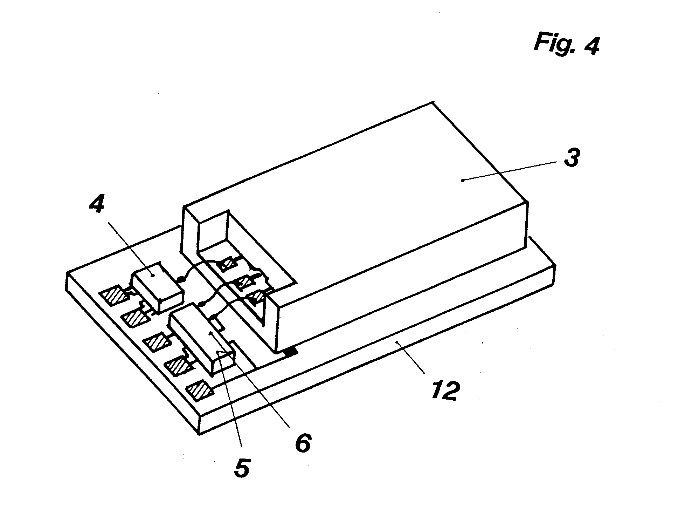

Fig. 4 zeigt eine erfindungsgemässe perspektivische Ansicht der oben beschriebenen elektronischen Komponenten und des Sensorchips 3. Die Komponenten sind auf einer Substratplatte 12 montiert, vorzugsweise einem aus Aluminiumnitrid oder Aluminiumoxid mit Siebdruck gefertigten Hybridsubstrat. Anstatt Keramiksubstraten können auch porzellanisierte Stahlsubstrate verwendet werden. Das Substrat ist vorzugsweise im Miniaturgehäuse 2 mit einem thermisch und elektrisch isolierenden Epoxy-oder Silikonkleber befestigt. Alternativ kann das Kalibrierungs-Netzwerk 4 im Aufnehmer 1 anstatt im Verbindungsstecker 15 untergebracht werden, wie Fig. 4 zeigt.

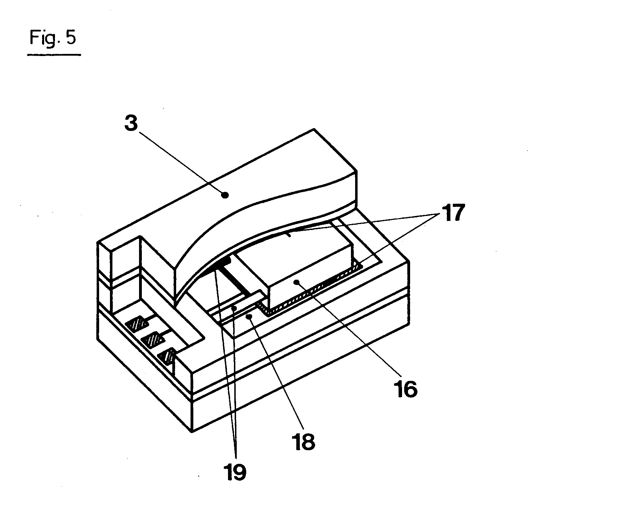

Fig. 5 zeigt ein erfindungsgemässes Sensorchip 3 in einer perspektivischen Teilansicht. Vorzugsweise ist es ein feinst bearbeitetes Silizium-Sensorchip, wie schon in vielen Ausführungsformen in der Literatur beschrieben. Es transformiert eine Beschleunigung in eine differentielle Kapazitätsänderung zwischen einer beweglichen Platte 16, ausgebildet als eine freitragende Zentralelektrode und als seismische Masse dienend. Diese bewegliche Platte 16 wird im wesentlichen durch ein Silizium-Federsystem 19 zwischen einer unteren und einer oberen festen Elektrode 17 festgehalten, die auf Silizium-oder Glasplatten aufgebracht sind. Beschleunigung veranlasst die freitragende Elektrode 16 das Silizium-Federsystem 19 sich zu deformieren und dadurch eine messbare Veränderung der Differenzkapität zwischen der Zentralelektrode 16 und den stationären Elektroden 17 zu erzeugen, an welche die Erregerspannungen gelegt werden. Die Frequenzabhängigkeit von Amplitude und Phase der Differenzkapazität zu der Zentralelektrode 16 kann durch Aenderung der Kondensatordimensionierung und des Gasdruckes in der Kavität 18 des Sensorchips 3 den Anforderungen der Anwendung angepasst werden.

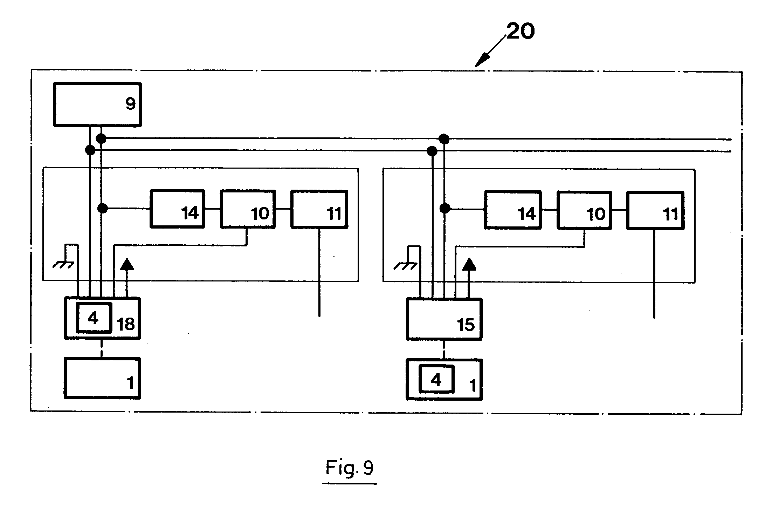

Ein Mehrfachkanal-Erregerkreis ist in Fig. 9 dargestellt. Ein gemeinsamer Erregungskreis 9 speist parallel jeden der Aufnehmer 1 und die Mehrzahl der Demodulationskreise 10 durch individuelle Phasenschieber 14. Demodulatoren 10 sind durch Kabel 15 mit einem entsprechenden Aufnehmer 1 verbunden. Der Ausgang jedes Demodulators wird durch ein Filter 11 geführt. Der Kalibrierungskreis ist in einem der dargestellten Verbindungskabel 15 gezeigt und ebenfalls im Aufnehmer 1. Im Multi-Elektronikmodul 20 sind noch viele weitere Kanäle verfügbar.

Es ist klar, dass die dargestellten Ausführungsbeispiele die Erfindung illustrieren, jedoch nicht begrenzen, Deren Begrenzung ist lediglich durch die Patentansprüche gegeben.

## Patentansprüche

1. Kapazitives Beschleunigungs-Messsystem, insbesondere für Modul-Analyse, dadurch gekennzeichnet, dass es mindestens einen Aufnehmer (1) mit mindestens einem Sensorchip (3) mit einem Differentialkondensator und einen Impedanzwandler (6), die elektrisch verbunden und in einem Gehäuse (2) montiert sind, ferner einen davon entfernten Elektronikmodul (8) mit wenigstens einem Erregerkreis (9) und einem damit elektrisch verbundenen Demodulationskreis (10), sowie ein Verbindungskabel (7) umfasst, welches den Elektronikmodul (8) mit dem Gehäuse (2) elektrisch verbindet, wobei Elektronikmodul (8) und Gehäuse (2) vibrationsmässig getrennt sind.

2. Kapazitives Beschleunigungs-Messsystem nach Anspruch 1, dadurch gekennzeichnet, dass der Sensorchip (3), der Impedanzwandler (6) und ein Polarisations-Netzwerk (5) auf einer gemeinsamen Substratplatte (12) aufgebracht sind.

3. Kapazitives Beschleunigungs-Messsystem nach Anspruch 1, dadurch gekennzeichnet, dass der Erregerkreis (9) einen RF-Sinuswellengenerator, der Aufnehmer (1) ein Polarisations-Netzwerk (5) zwecks Superposition einer Gleichspannung auf die beschleunigungsabhängige RF-Differentialspannung des Sensorchips (3) umfasst, wobei der Impedanzwandler (6) das vom Sensorchip (3) und Polarisations-Netzwerk (5) ausgehende Signal verstärkt und das synchrone Polarisations-Netzwerk (5) mit einem Eingangssignal speist, welches im wesentlichen unabhängig von der Länge des Kabels (7) ist.

4. Kapazitives Beschleunigungs-Messsystem nach Anspruch 3, dadurch gekennzeichnet, dass der Erregerkreis (9) einen Differential-Sinuswellengenerator umfasst, welcher zwei RF-Spannungen derselben Frequenz, jedoch mit umgekehrten Phasen enthält sowie einen Phasenschieber (14), der ein Synchronisationssignal für den Demodulationskreis (10) liefert.

5. Kapazitives Beschleunigungs-Messsystem nach Anspruch 1, dadurch gekennzeichnet, dass der Erregerkreis (9) Hilfsmittel zur Anpassung der Systemempfindlichkeit durch Amplitudenvariation der das Sensorchip (3) speisenden RF-Spannungen enthält.

6. Kapazitives Beschleunigungs-Messsystem nach Anspruch 1, dadurch gekennzeichnet, dass der Erregerkreis (9) einen Differential-Sinuswellengenerator umfasst, welcher zwei RF-Spannungen derselben Frequenz, aber umgekehrter Phase erzeugt sowie Hilfsmittel zur Einstellung der relativen Amplitude der beiden RF-Spannungen.

7. Kapazitives Beschleunigungs-Messsystem nach Anspruch 1, dadurch gekennzeichnet, dass der Elektronikmodul (8) Filtereinrichtungen umfasst zwecks Filterung des Ausgangssignals des Demodulationskreises (10).

8. Kapazitives Beschleunigungs-Messsystem nach Anspruch 1, dadurch gekennzeichnet, dass es ein Kalibrierungs-Netzwerk (4) zwischen Erregerkreis (9) und Sensorchip (3) umfasst.

9. Kapazitives Beschleunigungs-Messsystem nach Anspruch 8, dadurch gekennzeichnet, dass sich das Kalibrierungs-Netzwerk (4) im Aufnehmer (1) befindet.

10. Kapazitives Beschleunigungs-Messsystem nach Anspruch 8, dadurch gekennzeichnet, dass sich das Kalibrierungs-Netzwerk (4) im Kabel (7) befindet.

11. Kapazitives Beschleunigungs-Messsystem nach Anspruch 1, dadurch gekennzeichnet, dass es einen Mehrkanal-Elektronikmodul (8) umfasst, welcher einen gewöhnlichen Erregerkreis (9) und eine Mehrzahl von synchronen Demodulationskreisen (10) enthält, sowie eine Mehrzahl von Aufnehmern (1), wobei jeder mit einem entsprechenden Demodulationskreis (10) und dem gemeinsamen Erregerkreis (9) durch ein Kabel (7) verbunden ist.
